# EUROPÄISCHE PATENTANMELDUNG

(11) **EP 4 650 102 A2**
(43) Veröffentlichungstag der Anmeldung: **19.11.2025**
(21) Anmeldenummer: 25171513.2
(22) Anmeldetag: 19.04.2025
(51) Int. Cl.: B24B 19/00, B24B 45/00

(54) **VERFAHREN ZUM SPANNEN EINES WERKZEUGS AUF EINER WERKZEUGSPINDEL BEI EINER HARTFEINBEARBEITUNGSMASCHINE UND HARTFEINBEARBEITUNGSMASCHINE**

(30) Priorität: 16.05.2024 DE 102024113831
(71) Anmelder: Kapp Niles GmbH & Co. KG, 96450 Coburg (DE)
(72) Erfinder: Dr. Grinko, Sergiy, 96450 Coburg (DE); Stegner, Achim, 96450 Coburg (DE); Schilling, Nico, 96486 Lautertal (DE); Luther, Lars, 96484 Meeder (DE); Armborst, Holger, 96515 Sonneberg (DE); Gleichmann, Julian, 96484 Meeder (DE)
(74) Vertreter: Gosdin, Carstensen & Partner Patentanwälte Partnerschaftgesellschaft mbB

(57) **Zusammenfassung**

Die Erfindung betrifft ein Verfahren zum Spannen eines Werkzeugs (4) auf einer Werkzeugspindel (1) bei einer Hartfeinbearbeitungsmaschine, wobei diese aufweist: eine mit einem Antriebsmotor in Verbindung stehende Werkzeugspindel (1) mit zylindrischem Aufnahmesitz (2) und Gewinde (3) sowie ein Werkzeug (4), wobei der Aufnahmesitz (2) an einer axialen Position der Werkzeugspindel (1) durch einen Anlageflansch (6) für die axiale Anlage des Werkzeugs (4) begrenzt wird und wobei eine Spannmutter (7) auf dem Gewinde (3) aufschraubbar ist, die zur axialen Anlage an das Werkzeug (4) ausgebildet ist. Um in einfacher Weise eine hinreichende axiale Werkzeugspannkraft abzusichern, sieht die Erfindung vor, dass weiterhin Mittel (10) angeordnet sind, um die Spannmutter (7) bei der Drehung der Werkzeugspindel (1) mit dem Antriebsmotor zeitweilig drehfest zu halten, wobei das Verfahren die Schritte aufweist: a) Aufsetzen des Werkzeugs (4) auf den Aufnahmesitz (2) und Aufschrauben der Spannmutter (7) auf das Gewinde (3); b) Blockieren einer Drehung der Spannmutter (7) durch die Mittel (10), so dass die Spannmutter (7) bei der Drehung der Werkzeugspindel (1) mit dem Antriebsmotor drehfest ist; c) Betätigen des Antriebsmotors und hierdurch Anziehen der Spannmutter (7), so dass diese axial gegen das Werkzeug (4) drückt. Des Weiteren betrifft die Erfindung eine Hartfeinbearbeitungsmaschine.

## Beschreibung

Die Erfindung betrifft ein Verfahren zum Spannen eines Werkzeugs auf einer Werkzeugspindel bei einer Hartfeinbearbeitungsmaschine, wobei die Hartfeinbearbeitungsmaschine aufweist: eine mit einem Antriebsmotor in Verbindung stehende Werkzeugspindel mit einem zylindrischen Aufnahmesitz und einem Gewinde und ein Werkzeug, insbesondere ein Schleifwerkzeug, mit einer Bohrung für die Aufnahme des Werkzeugs auf dem Aufnahmesitz, wobei der Aufnahmesitz an einer axialen Position der Werkzeugspindel durch einen Anlageflansch für die direkte oder indirekte axiale Anlage des Werkzeugs begrenzt wird und wobei eine Spannmutter auf dem Gewinde aufschraubbar ist, die zur direkten oder indirekten axialen Anlage an das Werkzeug ausgebildet ist. Des Weiteren betrifft die Erfindung eine Hartfeinbearbeitungsmaschine.

Bei einer Hartfeinbearbeitungsmaschine der gattungsgemäßen Art wird in Vorbereitung des Bearbeitungsprozesses, insbesondere des Schleifprozesses, ein Werkzeug auf der Werkzeugspindel aufgesetzt, wozu das Werkzeug eine Bohrung aufweist, die zu einem zylindrischen Sitz auf der Werkzeugspindel korrespondiert. Das Werkzeug wird axial gegen den Anlageflansch geschoben und dann beispielsweise durch Aufschrauben einer Spannmutter auf das Gewinde axial festgelegt bzw. gespannt. Hierzu sind auch normierte Bedingungen vorgegeben, um eine zuverlässige axiale Klemmung des Werkzeugs auf der Werkzeugspindel zu gewährleisten.

Insoweit ist es bekannt, dass Werkzeugdorne zum Einsatz kommen, auf welche das Schleifwerkzeug aufgesteckt wird. Dieses wird dann mit einer zentrisch liegenden Spannmutter, alternativ auch mit mehreren auf einem Teilkreis angeordneten Schrauben, geklemmt. Im letztgenannten Fall muss das Werkzeug einen metallischen Grundkörper aufweisen, in welchen das Schraubenlochbild eingebracht ist. Durch dessen Wandstärke geht nutzbare Abrichtstrecke der Schleifscheibe teilweise verloren. Eine andere typische Ausgestaltung sieht - insbesondere im Falle eines Vollkorundwerkzeugs - eine stirnseitige Spannung durch einen Flansch vor, welcher mit der Spindel verschraubt wird. Auch in diesem Falle geht, bedingt durch die Wandstärke des Flansches, nutzbare Abrichtstrecke des Schleifwerkzeugs verloren. In allen Fällen (Spannmutter, Schrauben oder Flansch) entspricht die erzeugte Schraubenkraft der Einspannkraft, mit der die Schleifscheibe axial geklemmt wird. Durch die entstehende Stirnflächenreibung zwischen Schleifscheibe und Anlageflächen können die nötigen Bearbeitungskräfte und das Antriebsdrehmoment übertragen werden.

Insbesondere bei der Montage kleiner Schleifschnecken auf entsprechenden Dornen bzw. Spindeln ist das Anzugsmoment für die Spannmutter mitunter problematisch. Um den zuverlässigen Sitz des Werkzeugs zu gewährleisten, müssen in der Regel relativ große Momente auf die Spannmutter aufgebracht werden, so dass Setzbeträge (insbesondere von Zwischenringen, die aus Kunststoff bestehen) bzw. Bearbeitungslasten aufgefangen werden können. Infolge von Setzerscheinungen muss gegebenenfalls auch nach einer gewissen Produktionszeit die Spannmutter nachgezogen werden.

Nachteilig ist bei dem vorbekannten Verfahren, dass sich insbesondere bei Innenwälzschleifaufgaben dadurch Probleme ergeben, dass relativ kleine Werkzeuge eingesetzt werden müssen (d. h. insbesondere kleine Schleifschnecken), so dass die oben geschilderte Problematik in verstärktem Maße auftritt. Ferner ist insbesondere in diesem Falle das korrekte Montieren und Spannen des Werkzeugs auf der Werkzeugspindel arbeitsaufwendig und damit teuer. Das gilt insbesondere dann, wenn während des Produktionsprozesses in periodischen Abständen ein Nachziehen der Spannung des Werkzeugs durchgeführt wird, um den zuverlässigen Sitz des Werkzeugs auf der Spindel gewährleisten zu können.

Somit ergibt sich insbesondere im Falle der Anwendung beim Innenwälzschleifen, dass die kompakte Baugröße der Schleifeinheit keinen Platz für einen metallischen Grundkörper zur Befestigung der Schleifscheibe mit Schrauben bietet. Zudem sind die Werkzeugwechselzeiten für das Lösen und Anziehen der zahlreichen Schrauben verhältnismäßig lang. Die häufigen Werkzeugwechsel der kleinen Korundscheiben bzw. Korundschnecken wirken sich dabei besonders negativ aus. Deshalb wird gemäß der eingangs genannten Konzeption eine zentrisch verbaute Stirnmutter (Spannmutter) zum Aufbauen der Einspannkraft bevorzugt. Diese kann schnell gewechselt, frei gestaltet und an die gegebenen Platzverhältnisse besser angepasst werden. Die Spannmutter liegt dabei an der Schleifscheibe an und drückt diese an den Bord des Flansches der Werkzeugspindel.

Die hier zum Einsatz kommenden Schleifscheiben bestehen im Wesentlichen aus Schleifkörnen, welche von einem Bindemittel zusammengehalten werden.

Diese poröse Struktur ist anfällig auf eine zu hohe Flächenpressung, welche vor allem unterhalb der Einspannflächen bei zu großen Einspannkräften auftreten kann. Die dabei entstehenden Spannungsspitzen können zu Rissen in der Scheibenstruktur führen. Sind andererseits die Einspannkräfte zu gering, ist die Einspannung nicht in der Lage, alle nötigen Kräfte und Momente zu übertragen. Die Folge ist ein Durchdrehen der Schleifscheibe auf dem Scheibensitz. Damit stimmt dann allerdings die Winkellage zwischen Schleifmotor und Schleifwerkzeug nicht mehr überein und die Wälzkopplung geht verloren. Somit führen sowohl zu geringe als auch zu hohe Einspannkräfte zum Versagen der Schleifscheibe. Daraus resultieren dann Schäden an Werkstück und Maschine.

Aus der JP H08 290 359 A ist ein Verfahren zum Anziehen und Lösen der Spannmutter einer Schleifscheibe bekannt, bei dem die Spannmutter drehbar über Schrauber angetrieben wird. Die DE 36 44 441 A1 beschreibt ein Verfahren, bei dem das Spannen einer Schleifscheibe bei ausgeschaltetem Antriebsmotor der Werkzeugspindel per Hand erfolgt.

Der Erfindung liegt die **Aufgabe** zugrunde, ein Verfahren der eingangs genannten Art so fortzubilden und eine entsprechende Hartfeinbearbeitungsmaschine bereitzustellen, so dass in einfacher Weise eine hinreichende axiale Werkzeugspannkraft abgesichert werden kann. Ferner soll es möglich werden, in wesentlich vereinfachter Weise die Montage und insbesondere das axiale Spannen des Werkzeugs auf der Spindel zu ermöglichen. Schließlich soll die Möglichkeit eines automatisierten Montierens bzw. Spannens des Werkzeugs auf der Spindel geschaffen werden. Dadurch sollen insbesondere kleine Werkzeuge mit geringem Nutzvolumen zuverlässig und in einfacher Weise auf der Werkzeugspindel gespannt werden können.

Die **Lösung** dieser Aufgabe durch die Erfindung ist verfahrensgemäß dadurch gekennzeichnet, dass an der Hartfeinbearbeitungsmaschine weiterhin Mittel angeordnet sind, um die Spannmutter bei der Drehung der Werkzeugspindel mit dem Antriebsmotor zeitweilig drehfest zu halten, wobei das Verfahren die Schritte aufweist:
a) Aufsetzen des Werkzeugs auf den Aufnahmesitz und Aufschrauben der Spannmutter auf das Gewinde (vorzugsweise mit einem Handhabungssystem);
b) Blockieren einer Drehung der Spannmutter durch die Mittel, so dass die Spannmutter bei der Drehung der Werkzeugspindel mit dem Antriebsmotor drehfest ist;
c) Betätigen des Antriebsmotors und hierdurch Anziehen der Spannmutter, so dass diese axial gegen das Werkzeug drückt.

Auf diese Weise kann alleinig durch Nutzung des Drehmoments des Antriebsmotors der Werkzeugspindel der Spannvorgang des Werkzeugs durchgeführt werden, vorzugsweise vollautomatisch.

Sehr vorteilhaft ist in diesem Zusammenhang ferner, dass dieser Vorgang, gegebenenfalls durch Einsatz geeigneter Handhabungssysteme, in relativ einfacher Weise automatisiert werden kann.

Besonders vorteilhaft ist es weiterhin, dass es möglich ist, das beschriebene Spannverfahren für das Werkzeug auch während des Produktionsprozesses mindestens einmal, vorzugsweise periodisch, bei gespanntem Werkzeug zu wiederholen, wie es eine Fortbildung vorsieht. Auch dies kann in sehr kurzer Zeit und vollständig automatisiert erfolgen.

Die gattungsgemäß ausgebildete Hartfeinbearbeitungsmaschine sieht erfindungsgemäß vor, dass an ihr weiterhin Mittel angeordnet sind, um die Spannmutter bei der Drehung der Werkzeugspindel mit dem Antriebsmotor zeitweilig drehfest zu halten.

Um das Drehmoment des Antriebsmotors optimal für das Spannen des Werkzeugs zu nutzen, hat sich die spezielle Ausgestaltung der Maschine bewährt, wonach axial zwischen dem Anlageflansch und dem Werkzeug ein erster Ring angeordnet ist, der zwischen sich und dem Anlageflansch einen ersten Reibkoeffizienten aufweist, und dass axial zwischen der Spannmutter und dem Werkzeug ein zweiter Ring angeordnet ist, der zwischen sich und der Spannmutter einen zweiten Reibkoeffizienten aufweist, wobei der erste Reibkoeffizient größer ist als der zweite Reibkoeffizient.

Der erste Reibkoeffizient ist bevorzugt mindestens zwei Mal so groß als der zweite Reibkoeffizient. Konkret kann vorgesehen werden, dass der erste Reibkoeffizient mindestens 0,5 und der zweite Reibkoeffizient höchstens 0,15 beträgt.

Der erste Ring kann aus einem Grundkörper bestehen, der mit einer reibungserhöhenden Beschichtung versehen ist. Die reibungserhöhende Beschichtung kann Diamantkörner oder Bornitridkörner aufweisen oder durch diese gebildet werden.

Der zweite Ring kann aus einem Grundkörper bestehen, der mit einer reibungsmindernden Beschichtung versehen ist oder dessen Material einen geringen Reibungskoeffizienten aufweist. Bei diesem Material ist insbesondere an einen Kunststoff gedacht.

Zwischen dem ersten Ring und dem Werkzeug kann ein dritter Ring aus Kunststoff angeordnet sein. Infolge der reibungserhöhenden Beschichtung des ersten Rings kann ein guter drehfester Verbund mit dem dritten Ring hergestellt werden; der dritte Ring wiederum kann infolge seiner Ausführung aus Kunststoff sehr gut mit den Korundpartikeln des Werkzeugs (im Falle der Ausbildung als Schleifwerkzeug) in drehfester Verbindung stehen, so dass ein hohes Drehmoment vom Flansch der Werkzeugspindel über den ersten und dritten Ring auf das Werkzeug übertragen werden kann.

Zwischen dem zweiten Ring und dem Werkzeug kann ein vierter Ring angeordnet werden, der Acrylnitril-Butadien-Kautschuk (NBR) aufweist oder aus diesem Material besteht.

Die zum Einsatz kommenden dritten und vierten Ringe haben aufgrund ihrer Beschaffenheit aus einem Kunststoff in gewissem Umfang eine federelastische Wirkung, so dass nach Anziehen der Spannmutter Sicherheit gegen Setzerscheinungen gegeben ist.

Die axiale Einspannung insbesondere einer keramisch gebundenen Schleifschnecke kann bei der vorgeschlagenen Ausgestaltung in der Art erfolgen, dass die Setzbeträge infolge der (Beilag-)Ringe, des Werkzeugs und der Spannelemente in solch einem Verhältnis zur Steifigkeit stehen, dass die Einspannkraft trotz Setzerscheinungen zu mindestens 90 % erhalten bleibt. Begünstigt wird dies durch die genannte Reibbeiwert-erhöhende Beschichtung, die eine wesentliche Erhöhung der übertragbaren Momente ermöglicht, was namentlich dann von wesentlicher Bedeutung ist, wenn das Anziehen der Spannmutter alleine durch den Antriebsmotor der Werkzeugspindel erfolgt (und damit eine verminderte axiale Normalkraft der Einspannung gegeben ist, wie es im Falle dessen gegeben ist, wenn der Spannvorgang mittels eines Werkzeugs händisch durchgeführt wird).

Das dadurch verringerte notwendige Anzugsmoment der aufgeschraubten Spannmutter kann nun in besonders günstiger Weise vom Antriebsmotor der Werkzeugspindel selbst aufgebracht werden. Wenn die Spannmutter eine Möglichkeit zur Momentenabstützung erhält, kann automatisiert ein Werkzeug gespannt werden. Die Werkzeugspannung kann somit automatisiert nachgezogen und über die Motorströme überwacht und gesteuert werden. Dies bietet eine zusätzliche Möglichkeit, den Setzbeträgen Rechnung zu tragen. Ein Nachziehen der Spannmutter kann zeitlich wirkende Mechanismen ausgleichen.

Somit wird die Umsetzung eines automatischen Spannkonzepts für das Werkzeug auf der Werkzeugspindel und somit ein automatischer Werkzeugwechsel ermöglicht. Insbesondere im Zusammenhang mit dem Innenwälzschleifen, bei dem kleine Werkzeuge (Schleifschnecken) mit geringem Nutzdurchmesser ohne Shiftmöglichkeit bei einer sensiblen Lagerung zum Einsatz kommen, hat sich das vorgeschlagene Konzept besonders bewährt. Hier ist nämlich ein automatischer Werkzeugwechsel von besonderem Vorteil. Dies gilt insbesondere, wenn ein abrichtbares Schleifwerkzeug und insbesondere eine abrichtbare Schleifschnecke mit keramisch gebundenem Schleifmittel eingesetzt wird, da hier ein relativ häufiger Werkzeugwechsel erfolgen muss.

Somit wird gemäß dem vorgeschlagenen Verfahren sowie gemäß der vorgeschlagenen Ausgestaltung der Maschine ein Konzept zum automatischen Spannen des rotierenden Werkzeugs bereitgestellt, wobei das für das Spannen benötigte Drehmoment bzw. die Spannkraft das Anzugsmoment der Spannmutter ausschließlich durch den Antriebsmotor der Werkzeugspindel aufgebracht wird. Beim Spannvorgang wird die Spannmutter an der Drehung gehindert und der Motor betätigt, so dass die Spannmutter auf dem Gewinde der Werkzeugspindel mit hinreichendem Drehmoment aufgeschraubt wird.

In der Zeichnung sind Ausführungsbeispiele der Erfindung dargestellt.
- Fig. 1: zeigt in perspektivischer Darstellung einen Schleifarm, an dem ein Werkzeug in Form einer Schleifscheibe gespannt ist,
- Fig. 2: zeigt in perspektivischer Darstellung den Schleifarm gemäß Figur 1, wobei hier Mittel zum Drehfesthalten der Spannmutter für das Spannen des Werkzeugs dargestellt sind, d. h. gezeigt ist der Spannvorgang des Werkzeugs durch Nutzung des Antriebsmoments des Antriebsmotors der Werkzeugspindel,
- Fig. 3: zeigt in Explosionsdarstellung den Schleifenarm gemäß Figur 2 und
- Fig. 4: zeigt den Radialschnitt durch die Werkzeugspindel unter Angabe des Verlaufs der aufgebrachten und übertragenen Kräfte.

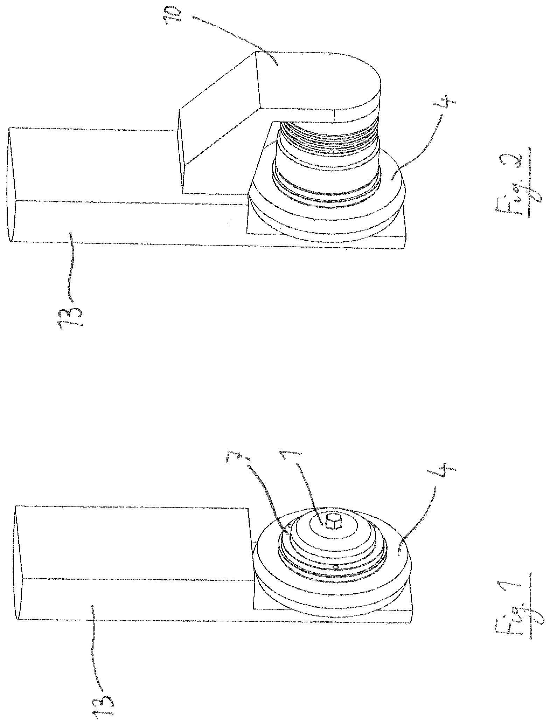

In Figur 1 ist ein stabförmiger Schleifarm 13 zu sehen, der an seinem unteren axialen Ende eine Werkzeugspindel 1 aufweist, die von einem nicht dargestellten Antriebsmotor angetrieben wird. Der Antriebsmotor kann beispielsweise oberhalb des Schleifarms 13 angeordnet sein und sein Drehmoment über einen Riemenantrieb auf die Werkzeugspindel 1 übertragen; allerdings ist natürlich auch ein anderer Antrieb möglich, beispielsweise ein direkter Antrieb der Werkzeugspindel (mit direkt auf der Spindel angeordnetem Antriebsmotor).

Die Werkzeugspindel 1 trägt ein Werkzeug 4 in Form einer Schleifschnecke. Das Werkzeug 4 ist auf der Werkzeugspindel 1 mittels einer Spannmutter 7 befestigt.

Wie sich aus den nachfolgenden Erläuterungen ergibt, ist der Aufbau der Anordnung so gestaltet, dass es möglich wird, alleinig durch das Drehmoment des (nicht dargestellten) Antriebsmotor der Werkzeugspindel 1 das Werkzeug 4 auf der Werkzeugspindel 1 zu spannen, d. h. die Spannmutter 7 anzuziehen. Hierfür wird - was in Figur 2 skizziert ist - die Spannmutter 7 mittels eines Gegenhalters 10 (Mittel zum Drehfesthalten der Spannmutter 7) an einer Drehung gehindert; gleichzeitig wird der Antriebsmotor betätigt und auf diese Weise die Spannmutter 7 angezogen. Dargestellt ist noch eine Balgkupplung 14, die zwischen dem Gegenhalter 10 und der Spannmutter 7 angeordnet ist.

Der Gegenhalter 10 kann allerdings auch als separates Element ausgeführt werden, welches in der Maschine angeordnet ist und bei Bedarf aus einer Ruheposition an die Spannmutter 7 herangefahren wird, um deren Drehung zu blockieren.

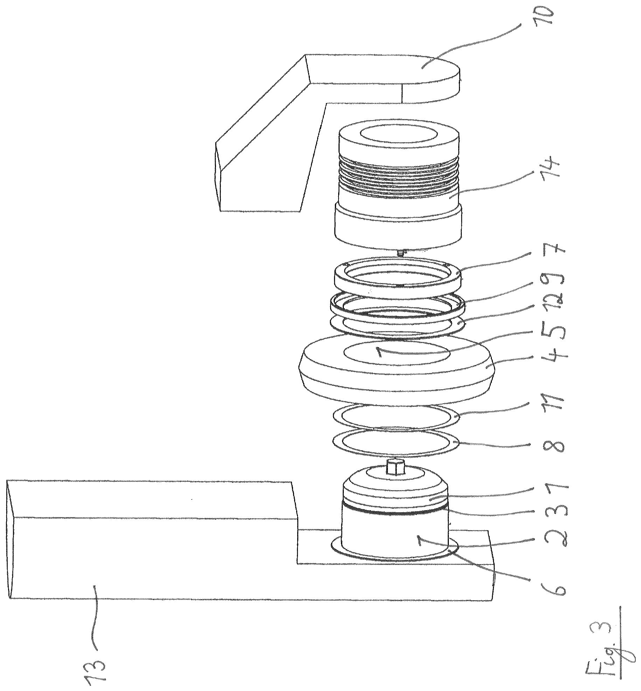

Was die konkrete Ausgestaltung der Mittel 10 anbelangt, sind vielfältige Möglichkeiten gegeben. Eine vorteilhafte Möglichkeit besteht darin, dass an den Mitteln 10 mehrere sich in axiale Richtung erstreckende Vorsprünge bzw. Stifte angeordnet sind, die in korrespondierende Ausnehmungen bzw. Bohrungen in der Spannmutter 7 eingreifen (dies ist in Figur 1 sowie in Figur 3 zu erkennen, wo über den Umfang verteilt drei Ausnehmungen in der Spannmutter 7 vorgesehen sind). Auf diese Weise wird die Spannmutter 7 am Drehen gehindert, wenn die Mittel 10 eingreifen.

Der genaue Aufbau der Anordnung, der sich nach einer bevorzugten Ausgestaltung der Erfindung ergibt, ist in Figur 3 dargestellt.

Zu erkennen ist hier zunächst die Werkzeugspindel 1 mit ihrem zylindrischen Aufnahmesitz 2 für das Werkzeug 4. Das Werkzeug 4 weist eine Bohrung 5 auf, die zum Aufnahmesitz 2 toleriert ist. Die Werkzeugspindel 1 weist ein Gewinde 3 für die Spannmutter 7 auf sowie einen Anlageflansch 6 für die axiale Anlage des Werkzeugs 4.

Wesentlich ist, dass axial zwischen dem Anlageflansch 6 und dem Werkzeug 4 ein erster Ring 8 angeordnet ist. Dieser weist zwischen sich und dem Anlageflansch 6 einen ersten Reibkoeffizienten µ₁ auf. Ferner ist axial zwischen der Spannmutter 7 und dem Werkzeug 4 ein zweiter Ring 9 angeordnet. Dieser weist zwischen sich und der Spannmutter 7 einen zweiten Reibkoeffizienten µ₂ auf. Wesentlich ist, dass der erste Reibkoeffizient µ₁ größer ist als der zweite Reibkoeffizient µ₂.

Damit wird einerseits erreicht, dass infolge des hohen Reibkoeffizienten µ₁ ein relativ hohes Drehmoment zwischen Werkzeug 4 und Anlageflansch 6 übertragen werden kann, was für den Betrieb der Anlage wesentlich ist. Andererseits wird es infolge des niedrigen Reibkoeffizienten µ₂ bewerkstelligt, dass beim Anziehen der Spannmutter 7 alleinig durch das Drehmoment des Antriebsmotors der Werkzeugspindel 1 eine relativ hohe axiale Kraft erzeugt werden kann, welche das Werkzeug 4 gegen den Anlageflansch 6 drückt, was Voraussetzung für eine sichere Drehmomentübertragung von der Werkzeugspindel auf das Werkzeug ist.

Zu diesem Zweck ist bevorzugt vorgesehen, dass der erste Ring 8 mit einer reibungserhöhenden Beschichtung versehen ist, während der zweite Ring 9 bevorzugt eine reibungsmindernde Beschichtung aufweist.

Wie sich aus Figur 3 weiter ergibt, ist zwischen dem ersten Ring 8 und dem Werkzeug 4 noch ein dritter Ring 11 aus Kunststoffmaterial angeordnet. Gleichermaßen ist zwischen dem Werkzeug 4 und dem zweiten Ring 9 ein vierter Ring 12 aus Acrylnitril-Butadien-Kautschuk angeordnet. Der dritte und der vierte Ring stellen in gewissem Umfang elastische Elemente dar, welche Setzungserscheinungen nach dem Spannvorgang des Werkzeugs entgegenwirken.

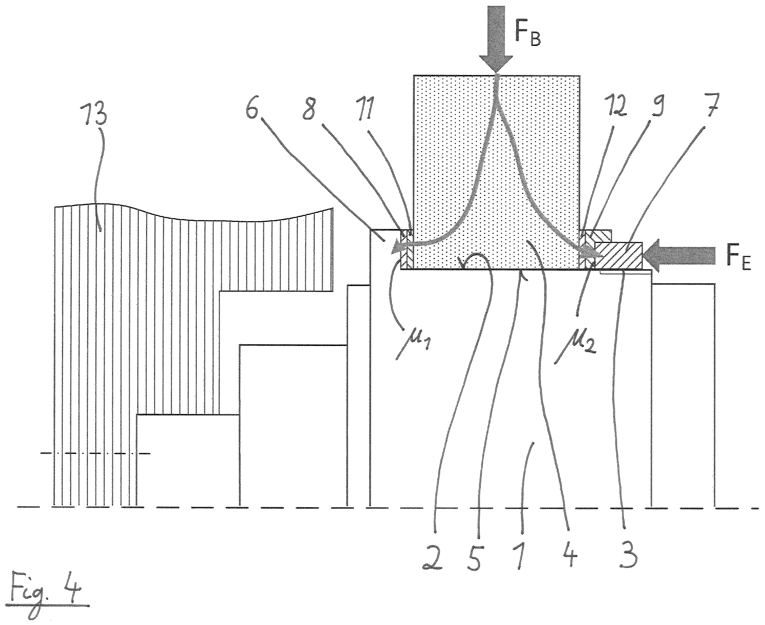

In Figur 4 ist der Aufbau nochmals im montierten Zustand skizziert, wobei auch die wirkenden Kräfte angedeutet sind; die Figur zeigt also den Spannaufbau der Werkzeugspannung. Die durch die Spannmutter 7 aufgebaute Einspannkraft F_{E} wirkt über die Reibfläche auf den zweiten Ring 9, welcher hier aus einem metallischen Körper besteht. Der zweite Ring 9 drückt axial auf den vierten Ring 12 aus NBR (Acrylnitril-Butadien-Kautschuk) und dieser wiederum auf die Schleifscheibe 4. Hierdurch wird die Schleifscheibe gegen den Anlageflansch 6 der Werkzeugspindel 1 gedrückt. Zwischen Anlageflansch 6 und Schleifscheibe 4 ist der mit Diamanten oder mit CBN belegte erste Ring 8 sowie der dritte Ring 11 aus Kunststoff angeordnet.

Ziel ist es, die Einspannkraft F_{E} zu minimieren. Um dies zu erreichen, werden die am Kraftfluss beteiligten Reibflächen wie erläutert mit unterschiedlichen Reibwerten versehen.

Die Anlageflächen des ersten Rings 8 einerseits am Anlageflansch 6 und andererseits am dritten Ring 11 haben infolge des Belags mit Diamantkörnern oder CBN hier einen hohen Reibwert (von µ₁ = 0,6). Der dritte Ring 11 wird gegen das Werkzeug 4 gedrückt. Nachdem dieses aus gebundenen Korundpartikeln besteht (die sich in das Material des dritten Rings 11 "eingraben" können), liegt auch hier ein weitgehend drehfester Verbund vor.

Die gegenüberliegende Seite besitzt an der Kontaktfläche zwischen Spannmutter 7 und zweitem Ring 9 einen sehr niedrigen Reibwert (von µ₂ = 0,1).

Die Pfeile in Figur 4 zeigen die dadurch mögliche, ungleichmäßige Einleitung der Betriebskraft F_{B}. Die Kontaktfläche mit dem höheren Reibwert kann so größere Betriebskräfte aufnehmen als die Kontaktfläche mit dem geringeren Reibwert. Der geringe Reibwert sorgt für ein geringes Auflagereibmoment der Spannmutter 7, wodurch das nötige Anzugsmoment zum Erreichen der Einspannkraft F_{E} sinkt. Für die Ermittlung der Einspannkraft müssen alle auftretenden Lasten im Betrieb berücksichtigt werden. Diese sind neben der zu übertragenden Leistung von den Abmessungen der Einspannflächen und den beim Schleifen auftretenden Schnittkräften abhängig. Nach Berücksichtigung der verschiedenen Reibwerte lässt sich die Kraft F_{E} berechnen. Ziel ist es dabei, die Spannmutter 7 nicht händisch, sondern mit dem zur Verfügung stehenden Motormoment des Antriebsmotors der Werkzeugspindel 1 anzuziehen. Hierfür wird die Spannmutter 7, wie erläutert, gegen Verdrehung gesichert, während sich der Motor dreht. Dieser Prozess kann vollautomatisiert durchgeführt werden.

Zu beachten sind dabei Setzungserscheinungen, die im Laufe der Zeit während der Produktion auftreten können. Diese tritt insbesondere bei Materialien mit geringer Festigkeit auf. Zum Ausgleich von Spannungsspitzen wird zwischen der Schleifscheibe 4 und dem ersten Ring 8 der dritte Ring 11 in Form eines dünnen Kunststoffring beigelegt. In diesen weichen Ring können sich erhabene Schleifkörner des porösen Schleifwerkzeugs 4 eindrücken, ohne das lokale Spannungsspitzen entstehen. Jedoch haben Kunststoffe den Nachteil, dass sie sich unter Last viskoelastisch oder plastisch verformen, d. h. kriechen. Die daraus resultierende Formänderung bewirkt eine Abstandsänderung zwischen Schleifscheibe 4 und Anlageflansch 6 der Werkzeugspindel 1. Die Folge ist ein Abbau der Einspannkraft.

Zum Ausgleich dieser Setzeffekte wird der zweite Ring 9 in den Spannaufbau integriert, der bevorzugt aus Kunststoff besteht. Dieser ist in seiner Funktion vergleichbar mit einer Druckfeder. Wird das Elastomer durch das Anziehen der Spannmutter 7 vorgespannt, baut sich abhängig von der Elastomer-Steifigkeit eine Vorspannkraft auf. Die Steifigkeit kann dabei über die Shore-Härte des Elastomers und deren Materialstärke eingestellt werden. Die Auslegung wird dabei so getroffen, dass die Vorspannkraftverluste des Elastomers durch die zu erwarteten Setzstrecken innerhalb der Einspannkrafttoleranz der Werkzeugklemmung ausgeglichen werden können.

Der erste Ring 8 zwischen dem Anlageflansch 6 und dem Werkzeug 4 ist, wie erläutert, bevorzugt mit CBN (Bornitrid) belegt bzw. beschichtet, so dass das Material des Rings 8 im Kontakt zu den jeweiligen angrenzenden Bauteilen (Anlageflansch 6 bzw. dritter Ring 11) einen wesentlich erhöhten Reibkoeffizienten aufweist. Der zweite Ring 9 besteht indes aus Kunststoffmaterial mit relativ geringem Reibkoeffizienten zu seinen angrenzenden Bauteilen (zum vierten Ring 12 bzw. zur Spannmutter 7). Sofern das Material des zweiten Rings 9 von Haus aus relativ zu den angrenzenden Bauteilen einen geringen Reibkoeffizienten hat, sind keine weiteren Maßnahmen erforderlich. Vorteilhaft kann es indes sein, dass der zweite Ring 9 mit einer Reibbeiwert-minimierenden Beschichtung versehen wird.

Zu beachten ist, dass die axiale Einspannung des Werkzeugs relativ zur Werkzeugspindel weiterhin axial hinreichend steif gegenüber den Bearbeitungslasten bleibt. Die umfassende Aufnahme von Setzbeträgen in den relativ weichen Ringen kann ansonsten zu einer negativen Prozessbeeinflussung führen.

Das eingebrachte Anzugsmoment durch den Antriebsmotor der Werkzeugspindel teilt sich entsprechend der Reibsituationen und Gewindesteigung auf. Der eine Teil geht in das Gewinde, auf welches die Spannmutter 7 aufgeschraubt wird, der andere Teil steht als Auflage-Reibmoment zur Verfügung, um die Spannmutter 7 axial an den zweiten Ring 9 anzudrücken; dieser Teil des Anzugsmoments wird folglich in eine Axialkraft umgesetzt, mit der das Werkzeug 4 axial gespannt wird. Durch eine geringe Reibung zwischen Spannmutter 7 und zweitem Ring 9 bzw. zwischen zweitem Ring 9 und viertem Ring 12 kann ein größerer Teil des Anzugsmoments in die axiale Spannkraft umgesetzt werden.

Im bevorzugten Anwendungsfall einer Werkzeugspindel 1 in Form einer Innenwälz-Schleifspindel wird ein abrichtbares Schleifwerkzeug 4 in Form einer Schleifschnecke eingesetzt. Da in diesem Falle das Werkzeug nur ein geringes nutzbares bzw. abrichtbares Volumen besitzt, leidet generell die Produktivität des Innenwälzschleifens und der häufig erforderlichen Werkzeugwechseln.

Hier kommt das vorgeschlagene Verfahren mit besonderem Vorteil zur Anwendung, wenn nämlich ein automatisches Spannen des Werkzeugs und/oder ein automatisches Nachziehen des eingespannten Werkzeugs 4 durchgeführt wird, indem die Spannmutter 7 mit den Mitteln 10 drehfest gehalten wird, während gleichzeitig der Antriebsmotor der Werkzeugspindel 1 betätigt und hierdurch die Spannmutter 7 angezogen/ nachgezogen wird.

Hierbei hat das genannte Nachziehen der Spannmutter insofern besondere Bedeutung, als dass bei kleinen Werkzeugen in besonderer Weise das Problem besteht, dass sich die Einspannung lösen und es hierdurch zu Produktionsunterbrechungen und Werkzeugschäden kommen kann.

Während das erläuterte Ausführungsbeispiel bevorzugt für eine Innenbearbeitung mittels eines Schleifarms zum Einsatz kommt, ist das oben beschriebene Konzept natürlich auch für andere Anwendungen tauglich, insbesondere für die Außenbearbeitung eines Profils bzw. einer Verzahnung.

Gleichermaßen kann der Antrieb der Werkzeugspindel letztlich in beliebiger Weise erfolgen, also beispielsweise durch einen Riemenantrieb, der im Schleifarm verläuft, aber auch durch einen Direktantrieb, der direkt mit der Spindel verbunden wird.

### Bezugszeichenliste:

- 1: Werkzeugspindel
- 2: zylindrischer Aufnahmesitz
- 3: Gewinde
- 4: Werkzeug (Schleifschnecke)
- 5: Bohrung
- 6: Anlageflansch
- 7: Spannmutter
- 8: erster Ring (mit reibungserhöhender Beschichtung)
- 9: zweiter Ring (mit reibungsmindernder Beschichtung)
- 10: Mittel zum Drehfesthalten der Spannmutter (Gegenhalter)
- 11: dritter Ring (aus Kunststoff)
- 12: vierter Ring (aus NBR)
- 13: Schleifarm
- 14: Balgkupplung

- µ₁: erster Reibkoeffizient
- µ₂: zweiter Reibkoeffizient

- F_{E}: Einspannkraft (eingeleitete axiale Kraft von der Spannmutter)
- F_{B}: Betriebskraft

## Patentansprüche

1. Verfahren zum Spannen eines Werkzeugs (4) auf einer Werkzeugspindel (1) bei einer Hartfeinbearbeitungsmaschine, wobei die Hartfeinbearbeitungsmaschine aufweist:
eine mit einem Antriebsmotor in Verbindung stehende Werkzeugspindel (1) mit einem zylindrischen Aufnahmesitz (2) und einem Gewinde (3) und
ein Werkzeug (4), insbesondere ein Schleifwerkzeug, mit einer Bohrung (5) für die Aufnahme des Werkzeugs (4) auf dem Aufnahmesitz (2),
wobei der Aufnahmesitz (2) an einer axialen Position der Werkzeugspindel (1) durch einen Anlageflansch (6) für die direkte oder indirekte axiale Anlage des Werkzeugs (4) begrenzt wird und
wobei eine Spannmutter (7) auf dem Gewinde (3) aufschraubbar ist, die zur direkten oder indirekten axialen Anlage an das Werkzeug (4) ausgebildet ist,
**dadurch gekennzeichnet,**
**dass** weiterhin Mittel (10) angeordnet sind, um die Spannmutter (7) bei der Drehung der Werkzeugspindel (1) mit dem Antriebsmotor zeitweilig drehfest zu halten,
wobei das Verfahren die Schritte aufweist:
a) Aufsetzen des Werkzeugs (4) auf den Aufnahmesitz (2) und Aufschrauben der Spannmutter (7) auf das Gewinde (3);
b) Blockieren einer Drehung der Spannmutter (7) durch die Mittel (10), so dass die Spannmutter (7) bei der Drehung der Werkzeugspindel (1) mit dem Antriebsmotor drehfest ist;
c) Betätigen des Antriebsmotors und hierdurch Anziehen der Spannmutter (7), so dass diese axial gegen das Werkzeug (4) drückt.

2. Verfahren nach Anspruch 1, **dadurch gekennzeichnet, dass** es während des Produktionsprozesses mindestens einmal, vorzugsweise periodisch, bei gespanntem Werkzeug wiederholt wird.

3. Hartfeinbearbeitungsmaschine, insbesondere Verzahnungs- oder Profilschleifmaschine, umfassend
eine mit einem Antriebsmotor in Verbindung stehende Werkzeugspindel (1) mit einem zylindrischen Aufnahmesitz (2) und einem Gewinde (3) und
ein Werkzeug (4), insbesondere ein Schleifwerkzeug, mit einer Bohrung (5) für die Aufnahme des Werkzeugs (4) auf dem Aufnahmesitz (2),
wobei der Aufnahmesitz (2) an einer axialen Position der Werkzeugspindel (1) durch einen Anlageflansch (6) für die direkte oder indirekte axiale Anlage des Werkzeugs (4) begrenzt wird und
wobei eine Spannmutter (7) auf dem Gewinde (3) angeordnet ist, die zur direkten oder indirekten axialen Anlage an das Werkzeug (4) ausgebildet ist,
**dadurch gekennzeichnet,**
**dass** weiterhin Mittel (10) angeordnet sind, um die Spannmutter (7) bei der Drehung der Werkzeugspindel (1) mit dem Antriebsmotor zeitweilig drehfest zu halten.

4. Hartfeinbearbeitungsmaschine nach Anspruch 3, **dadurch gekennzeichnet, dass** axial zwischen dem Anlageflansch (6) und dem Werkzeug (4) ein erster Ring (8) angeordnet ist, der zwischen sich und dem Anlageflansch (6) einen ersten Reibkoeffizienten (µ₁) aufweist, und dass axial zwischen der Spannmutter (7) und dem Werkzeug (4) ein zweiter Ring (9) angeordnet ist, der zwischen sich und der Spannmutter (7) einen zweiten Reibkoeffizienten (µ₂) aufweist, wobei der erste Reibkoeffizient (µ₁) größer ist als der zweite Reibkoeffizient (µ₂).

5. Hartfeinbearbeitungsmaschine nach Anspruch 4, **dadurch gekennzeichnet, dass** der erste Reibkoeffizient (µ₁) mindestens zwei Mal so groß ist als der zweite Reibkoeffizient (µ₂).

6. Hartfeinbearbeitungsmaschine nach einem der Ansprüche 4 oder 5, **dadurch gekennzeichnet, dass** der erste Reibkoeffizient (µ₁) mindestens 0,5 und der zweite Reibkoeffizient (µ₂) höchstens 0,15 beträgt.

7. Hartfeinbearbeitungsmaschine nach einem der Ansprüche 4 bis 6, **dadurch gekennzeichnet, dass** der erste Ring (8) aus einem Grundkörper besteht, der mit einer reibungserhöhenden Beschichtung versehen ist.

8. Hartfeinbearbeitungsmaschine nach Anspruch 7, **dadurch gekennzeichnet, dass** die reibungserhöhende Beschichtung Diamantkörner oder Bornitridkörner aufweist oder durch diese gebildet wird.

9. Hartfeinbearbeitungsmaschine nach einem der Ansprüche 4 bis 8, **dadurch gekennzeichnet, dass** der zweite Ring (9) aus einem Grundkörper besteht, der mit einer reibungsmindernden Beschichtung versehen ist oder dessen Material, insbesondere Kunststoff, einen geringen Reibungskoeffizienten aufweist.

10. Hartfeinbearbeitungsmaschine nach einem der Ansprüche 4 bis 9, **dadurch gekennzeichnet, dass** zwischen dem ersten Ring (8) und dem Werkzeug (4) ein dritter Ring (11) aus Kunststoff angeordnet ist.

11. Hartfeinbearbeitungsmaschine nach einem der Ansprüche 4 bis 10, **dadurch gekennzeichnet, dass** zwischen dem zweiten Ring (9) und dem Werkzeug (4) ein vierter Ring (12) angeordnet ist, der Acrylnitril-Butadien-Kautschuk (NBR) aufweist oder aus diesem Material besteht.
